# EUROPÄISCHE PATENTANMELDUNG

(11) **EP 2 340 717 A2**
(43) Veröffentlichungstag der Anmeldung: **06.07.2011**
(21) Anmeldenummer: 10192252.4
(22) Anmeldetag: 23.11.2010
(51) Int. Cl.: A23B 4/052

(54) **Raucherzeuger**

(30) Priorität: 30.12.2009 EP 09181004
(71) Anmelder: Created-Pool, 74226 Nordheim (DE)
(72) Erfinder: Christoph, Norbert, 74226, Nordheim (DE)
(74) Vertreter: Kohler Schmid Möbus

(57) **Zusammenfassung**

Ein Raucherzeuger (1) weist Mittel (10) zur Erzeugung von Rauch mittels Friktion und ein Holzvorratsmagazin (5) auf, das Mittel (11) zum Nachrutschen von Hölzern (7) auf das Friktionsrad (10) besitzt. Dies führt zu einem möglichst dauerhaften zumindest aber einem Betrieb des Raucherzeugers (1) über einen längeren Zeitraum.

## Beschreibung

Bei der Raucherzeugung kommt es zur Anwendung der Pyrolyse, d.h. der trockenen Destillation. Bei der Pyrolyse des Holzes entstehen in verschiedenen Temperaturbereichen unter anderem Methylalkohole beziehungsweise Methangase. Diese Verbindungen sind hochexplosiv und können sich chemisch auch in andere Verbindungen wie zum Beispiel Formaldehyd umwandeln. Formaldehyd gilt als gesundheitsgefährdend, weil Krebs erregend. Es können über 400 verschiedene chemische Verbindungen entstehen, die zum Teil unerforscht beziehungsweise unbekannt sind. Zur Farb- und Geschmacksgebung des geräucherten Produkts tragen allerdings nur wenige der Verbindungen bei.

Beim Reibrauch- oder Friktionsrauchverfahren wird ein Profilholz auf ein Reibrad mit entsprechend ausgebildeter Struktur mithilfe einer mechanischen Vorrichtung gedrückt. Für den Antrieb werden einfache Elektromotoren ohne Getriebe beziehungsweise Unter- oder Übersetzung verwendet. Die Drehzahl der Motoren liegt bei circa 3000 U/min. Zu Beginn der Pyrolyse wird das Profilholz auf das mit voller Drehzahl laufende Reibrad gedrückt. Durch diesen Vorgang wird Reibungswärme erzeugt, die dann die Pyrolyse unkontrolliert auslöst. Der Elektromotor wird bis an eine Belastungsgrenze belastet. Mithilfe der mechanischen Druckvorrichtung wird der Elektromotor entlastet, so dass der Elektromotor seine Drehzahl neu aufbauen kann. Nach einer Abkühlung wird der Elektromotor erneut bis an die Grenze belastet. Es ist zu vermuten, dass die vorgenannten gesundheitsschädlichen Verbindungen entstehen können. Darüber hinaus ist der Betrieb dieser Rauchererzeuger gefährlich, wenn Sauerstoff zugeführt wird, weil Explosionsgefahr besteht.

Der Erfindung liegt die Aufgabe zugrunde, einen möglichst dauerhaften zumindest aber einen Betrieb des Raucherzeugers über einen längeren Zeitraum zu gewährleisten.

Diese Aufgabe wird durch einen Raucherzeuger mit Mitteln zur Erzeugung von Rauch mittels Friktion und mit einem Holzvorratsmagazin, das Mittel zum Nachrutschen von Hölzern auf das Friktionsrad aufweist, gelöst. Das Nachrutschen der Hölzer führt dazu, dass ohne Unterbrechung Friktionsrauch erzeugt werden kann.

Das Nachrutschen funktioniert besonders gut, wenn die Hölzer senkrecht stehend bevorratet sind.

Die Holzzuführung wird weiter dadurch optimiert, ein Trichter zur Führung der Hölzer in Richtung des Friktionsrades vorgesehen ist. Dadurch schieben sich permanent Hölzer auf das Friktionsrad.

Zur Unterstützung und Gewährleistung, dass die Hölzer auf das Friktionsrad rutschen, kann eine Führung der Hölzer ausgebildet sein.

Wenn die Hölzer zwischen 10 bis 20 ° schräg aufgestellt sind, kommt der Vorgang des Nachrutschens automatisch in Gang.

Weitere Optimierungen können darin bestehen, dass im Bodenbereich des Holzvorratsmagazins eine Gleitführung für die Hölzer ausgebildet ist.

Um den Raucherzeuger zusätzlich in einem anderen Betriebsmodus zu betreiben, können zusätzlich Mittel zur Erzeugung von Dampfrauch vorgesehen sein.

Dieser Raucherzeuger kann zur technischen Umsetzung der Dampferzeugung und - leitung ein Friktionsrad mit Dampfaustrittsöffnungen aufweisen.

Zur Selbstreinigung können die Dampfaustrittsöffnungen schräg zur Außenumfangsfläche des Friktionsrades ausgerichtet sein.

Ein bevorzugtes Ausführungsbeispiel der Erfindung ist in der Zeichnung schematisch dargestellt und wird anhand der Figuren der Zeichnung erläutert. Es zeigt:

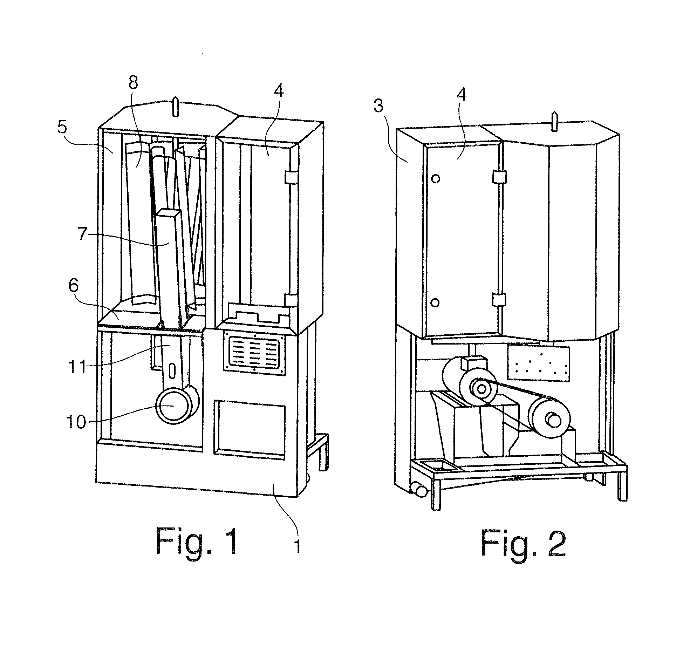

- Figur 1: einen Raucherzeuger in der Frontansicht;
- Figur 2: den Raucherzeuger in der Rückansicht.

Bei einem Raucherzeuger 1 wird mithilfe einer nicht näher erläuterten mechanischen Druckvorrichtung ein Holzstab 7 aus dem Magazin 5 auf ein Friktionsrad 10 aus Edelstahl aufgepresst. Der Holzstab 7 kann durch ein Profilholz beispielsweise aus Buche ausgebildet sein. Das Friktionsrad 10 kann auf den Friktionsflächen Bohrungen besitzen, die Austrittsöffnungen für überhitzten Wasserdampf ausbilden. Es kann daher kontinuierlich Wasserdampf aus dem Friktionsrad 10 in Richtung des Holzstabes austreten. Das Friktionsrad 10 ist abgedichtet und wird über eine Vorlegewelle mit Wasserdampf versorgt, der dem Raucherzeuger (Gehäuse 1) über eine Zuleitung mit ca. 1,5 bar zugeführt wird und in einem Dampfüberhitzer überhitzt wird. Steuerungen sind in einem Schaltschrank 3 mit einer Schaltschranktür 4 untergebracht.

Der Raucherzeuger kann grundsätzlich in zwei vorwählbaren Betriebsarten verwendet werden. Zum einen ist es möglich, mit reinem Friktionsrauch zu arbeiten, wie dies bei herkömmlichen Friktionsraucherzeugern der Fall ist. Es können zusätzlich Mittel zur Vermeidung und Reinigung der Dampföffnungen im Friktionsrad 10 vorgesehen sein. Auch das Friktionsrad 10 kann entsprechend ausgebildet sein. Beispielsweise können die Bohrungen (Dampföffnungen) schräg angeordnet sein, um eine Selbstreinigung de Bohrungen zu erreichen. Zum anderen ist es möglich, den Raucherzeuger in einem kombinierten Friktions-/Dampfrauchbetrieb zu verwenden, d.h. es wird sowohl Friktionsrauch als auch Dampfrauch erzeugt.

Das Friktionsrad 10 kann außerdem mithilfe des Wasserdampfs vor Beginn der Raucherzeugung erwärmt werden. Nach Ende der Raucherzeugung können die Austrittsöffnungen mithilfe des Wasserdampfs gereinigt werden.

Durch die Vorwärmung des Friktionsrades 10 erreicht man einerseits bei Beginn der Raucherzeugung schneller den Temperaturbereich, der für die Pyrolyse günstig ist. Andererseits kann der Wasserdampf anschließend das Friktionsrad 10 auf dem gewünschten Temperaturbereich halten und einen weiteren unerwünschten Temperaturanstieg verhindern. Mithilfe des Wasserdampfs kann auf die Steuerung der Temperatur des Friktionsrades 10 Einfluss genommen werden.

Eine Untersetzung des Antriebsmotors ermöglicht in diesem Temperaturbereich einen kontinuierlichen Anpressdruck und somit gleich bleibende Produktionsparameter. Der Antriebsmotor umfasst eine Regelung mit Frequenzumformer. Dadurch kann die Rauchdichte und die Reibtemperatur stufenlos geregelt werden.

Durch eine Dampfdrucküberwachung wird sichergestellt, dass die Pyrolyse inert abläuft und somit ein inertes Verhältnis gesichert ist.

Der Rauch wird in einer Rauchkammer erzeugt, mithilfe eines Gebläses weitergeleitet und kann über die Rauchaustrittsöffnung austreten.

Aus den Figuren ist ersichtlich, dass der Raucherzeuger ein Holzvorratsmagazin 5 mit einem Holzreservoir aufweist. Das Holzvorratsmagazin 5 ist als Revolvermagazin ausgeführt: Mehrere Kanthölzer 7 (mindestens sechs bis zu fünfzehn Stück, von denen in den Figuren nur eins eingezeichnet ist) können senkrecht stehend bevorratet werden. Dadurch wird ein problemloses Nachrutschen der Hölzer in einen Trichter 11 mithilfe von Führungen 8 sichergestellt. Das Holzvorratsmagazin 5 kann so mit verschiedenen Holzabmessungen geladen werden. Die einzelnen Holzvorratsplätze sind jeweils mit einer Holzführung ausgestaltet, so dass auch Reststücke eingesetzt und verwertet werden können. Dabei sind die Hölzer um ca. 10 bis 20° schräg eingestellt. Zusammen mit einer Gleitführung am Boden wird der Reibwiderstand beim Holztransport verringert. Es können auch gesägte Kanthölzer verwendet werden.

## Patentansprüche

1. Raucherzeuger (1) mit Mitteln (10) zur Erzeugung von Rauch mittels Friktion und mit einem Holzvorratsmagazin (5), das Mittel (11; 6; 8) zum Nachrutschen von Hölzern (7) auf das Friktionsrad (10) aufweist.

2. Raucherzeuger nach Anspruch 1, **dadurch gekennzeichnet, dass** die Hölzer (7) senkrecht stehend bevorratet sind.

3. Raucherzeuger nach Anspruch 1 oder 2, **dadurch gekennzeichnet, dass** ein Trichter (11) zur Führung der Hölzer (7) in Richtung des Friktionsrades (10) vorgesehen ist.

4. Raucherzeuger nach einem der vorhergehenden Ansprüche, **dadurch gekennzeichnet, dass** eine Führung (8) der Hölzer (7) ausgebildet ist.

5. Raucherzeuger nach einem der vorhergehenden Ansprüche, **dadurch gekennzeichnet, dass** die Hölzer (7) zwischen 10 bis 20 ° schräg aufgestellt sind.

6. Raucherzeuger nach einem der vorhergehenden Ansprüche, **dadurch gekennzeichnet, dass** im Bodenbereich (6) des Holzvorratsmagazins (5) eine Gleitführung für die Hölzer (7) ausgebildet ist.

7. Raucherzeuger nach einem der vorhergehenden Ansprüche, **dadurch gekennzeichnet, dass** zusätzlich Mittel zur Erzeugung von Dampfrauch vorgesehen sind.

8. Raucherzeuger nach einem der vorhergehenden Ansprüche, **dadurch gekennzeichnet, dass** das Friktionsrad (10) Dampfaustrittsöffnungen aufweist.

9. Raucherzeuger nach einem der vorhergehenden Ansprüche, **dadurch gekennzeichnet, dass** das die Dampfaustrittsöffnungen schräg zur Außenumfangsfläche des Friktionsrades (10) ausgerichtet sind.
